# EUROPÄISCHE PATENTSCHRIFT

(11) **EP 3 688 508 B1**
(45) Veröffentlichungstag und Bekanntmachung des Hinweises auf die Patenterteilung: **17.05.2023**
(21) Anmeldenummer: 18785279.3
(22) Anmeldetag: 28.09.2018
(51) Int. Cl.: G02B 21/33, G02B 21/02

(54) **MIKROSKOP**
MICROSCOPE
MICROSCOPE

(30) Priorität: 29.09.2017 DE 102017217389
(43) Veröffentlichungstag der Anmeldung: 05.08.2020
(73) Patentinhaber: Carl Zeiss Microscopy GmbH, 07745 Jena (DE)
(72) Erfinder: PERGANDE, Saskia, 07749 Jena (DE); SCHACHT, Peter, 99097 Erfurt (DE); MÖBIUS, Andreas, 07745 Jena (DE); SIEBENMORGEN, Jörg, 07743 Jena (DE); KALKBRENNER, Thomas, 07745 Jena (DE)
(74) Vertreter: Meyer, Jork
(86) Internationale Anmeldenummer: PCT/EP2018/076440
(87) Internationale Veröffentlichungsnummer: WO 2019/063782

(56) Entgegenhaltungen:
- EP-A2- 0 494 768
- WO-A1-2006/125538
- US-A1- 2006 098 297
- US-A1- 2006 197 927

## Beschreibung

Die Erfindung betrifft ein Mikroskop gemäß dem Oberbegriff des Anspruchs 1. Zur Erhöhung der Auflösung oder des Kontrastes von mikroskopischen Abbildungen ist es oft nötig die numerische Apertur zu erhöhen und/oder die Anzahl von Brechzahlübergängen zu minimieren. Dies kann erreicht werden, indem entsprechend ausgewählte Immersionsmedien eingesetzt werden.

Dabei wird ein Bereich zwischen Probe beziehungsweise Deckglas und Objektiv beziehungsweise einer dem Objektiv vorgeschalteten Linse, nachfolgend auch als Kontaktbereich bezeichnet, mit einem Kontaktmedium (beispielsweise einem Immersionsmedium) wie Wasser, Immersionsöl, Glycerin, Alkohol, mit anderen gebräuchlichen Immersionsmedien oder Gemischen aus diesen Substanzen gefüllt. Gerade bei höher vergrößernden Objektiven ist der Arbeitsabstand oft nur sehr gering und besonders bei inversen Mikroskopen zusätzlich schwer zugänglich. Eine manuelle Immersion, also ein manuelles Einbringen des Immersionsmediums in den Kontaktbereich, ist sehr kompliziert. Bei länger andauernden Mikroskopiervorgängen und der Verwendung von Wasser als Immersionsmedium kommt hinzu, dass aufgrund einer auftretenden Verdunstung des Wassers der Mikroskopiervorgang unterbrochen werden könnte, wenn das Immersionsmedium nicht nachgeführt wird. Wird Öl als Immersionsmedium verwendet, geht Immersionsmedium verloren, wenn beispielsweise die Probe neu positioniert wird und an dem Deckglas Immersionsmedium verschmiert wird (sogenannter "Schneckenspur-Effekt"). Eine automatische Immersion während des Mikroskopiervorganges ist daher vorteilhaft.

Um eine Frontlinse beispielsweise eines Objektivs manuell oder automatisch mit einem Immersionsmedium zu versorgen, sind verschiedene technische Lösungen bekannt, von denen nachfolgend einige beispielhaft angeführt sind.

Aus der WO 08/028475 A2 ist ein Immersionsobjektiv zur mikroskopischen Untersuchung eines Objekts bekannt, das eine Zuführeinrichtung zum Zuführen von Immersionsmedium, insbesondere einer Immersionsflüssigkeit, in den Bereich (Kontaktbereich) zwischen dem Objekt beziehungsweise einem Objektträger und der äußeren Linse des Objektivs, aufweist. Die Zuführeinrichtung umfasst eine den Objektivkörper umschließende, im Bereich der äußeren Linse offene Kappe, die zur äußeren Linse hin einen Spalt bildet. Innerhalb der Kappe ist ein Raum zur Aufnahme von Immersionsflüssigkeit gebildet. Die Immersionsflüssigkeit tritt über den Spalt aus. Die Zuführeinrichtung weist mindestens einen in der Kappe ausgebildeten Anschluss zur ständigen Versorgung mit Immersionsflüssigkeit auf.

In der US 3,837,731 A ist eine Vorrichtung zur Verteilung von Immersionsöl zwischen einer Frontlinse eines Objektivs und einem Objektträger wie einem Deckglas beschrieben. Das Objektiv ist von einem Behältnis umgeben und ragt durch eine Öffnung in einer Seitenwand des Behältnisses. Ein Immersionsöl ist bereitgestellt und fließt zwischen die Frontlinse und den Objektträger.

Die WO 2002/093232 A2 gibt eine Vorrichtung zur Untersuchung chemischer und/oder biologischer Proben an. Die Vorrichtung weist einen Probenträger zur Aufnahme von Proben und ein Objektiv zur Beobachtung der Probe durch eine Probenträgerwand auf. Zwischen einer Außenfläche der Probenträgerwand und einer Austrittslinse des Objektivs ist ein Spalt ausgebildet. Es ist eine automatische Zuführeinrichtung zum automatischen Zuführen von Immersionsmedium zwischen der Außenfläche der Probenträgerwand und die Austrittslinse des Objektivs vorgesehen.

Eine Vorrichtung und ein Verfahren zur Ausbildung eines Immersionsmittelfilms zwischen einem Probenträger und einem Objektiv eines Mikroskops sind aus der DE 20 2015 200 927 A1 bekannt. Die Erfindung betrifft ein Autoimmersionsmodul zur Zuführung des Immersionsmittels aus einem Immersionsmittelreservoir auf einen Auftreffort am Probenträger. Sie besteht aus einer mit einer Düse versehenen Spritzeinrichtung, die mit einer Pumpe zur Erzeugung eines Immersionsmittelstrahls verbunden ist. Dabei wird ein dosierter Immersionsmittelstrahl über das Autoimmersionsmodul auf einen Auftreffort zwischen Probenträger und Objektiv mit einer definierten Geschwindigkeit gespritzt.

Die angegebenen Lösungen benötigen allerdings einen entsprechend großen Bauraum im Umfeld des Objektivs. Weiterhin ist eine Positionierung der Linse erforderlich, für deren Mechanik ebenfalls Bauraum erforderlich ist.

Weitere technische Lösungen sind aus der US 7,128,427 B2 und aus der WO 2007/116647 A1 bekannt.

Die US 7,128,427 B2 beschreibt ein Verfahren und eine Vorrichtung für die Immersionslithografie. Die Vorrichtung umfasst ein Linsenelement, das einen Durchbruch in seiner Mitte aufweist. In einem Immersionsmedium enthaltenes Gas kann durch den Durchbruch aufsteigen und abgeführt werden, sodass der Lithographievorgang nicht durch sich unter dem Linsenelement ansammelnde Gasblasen gestört wird.

Eine ähnliche Lösung ist in der WO 2007/116647 A1 beschrieben. Eine mit einem Immersionsmedium in Kontakt stehende optische Linse weist abgeflachte Seitenbereiche oder Flanken auf, in denen sich mindestens ein Durchbruch befindet. Der Durchbruch dient der Ableitung unerwünschter Gasblasen.

Der Erfindung liegt die Aufgabe zu Grunde eine Möglichkeit vorzuschlagen, mittels der ein Immersionsmedium zuverlässig in einen Kontaktbereich gebracht werden kann und zugleich ein geringer Bauraum erforderlich ist.

Die Aufgabe wird durch ein Mikroskop mit einer optischen Linse gemäß Anspruch 1 gelöst. Vorteilhafte Weiterbildungen sind Gegenstand der abhängigen Ansprüche.

Die optische Linse ist zur Verwendung in einer Medienzuführungsvorrichtung vorgesehen und ausgebildet. Sie weist eine erste Linsenfläche und eine zweite Linsenfläche auf, wobei die erste Linsenfläche dazu vorgesehen ist, einem zu beobachtenden Objekt zugewandt zu werden und die zweite Linsenfläche dazu vorgesehen ist, dem zu beobachtenden Objekt abgewandt zu werden.

Erfindungsgemäß ist mindestens ein an der ersten Linsenfläche mündender Kanal ausgebildet, wobei der Kanal durch die optische Linse verläuft. In dem Kanal ist wenigstens ein Abschnitt einer Medienleitung zur Leitung eines Mediums ausgebildet. Der Kanal mündet außerhalb eines in vertikaler Ausrichtung befindlichen höchsten Punkts der ersten Linsenfläche. Sind mehrere Kanäle ausgebildet, mündet mindestens einer der vorhandenen Kanäle außerhalb eines in vertikaler Ausrichtung befindlichen höchsten Punkts der ersten Linsenfläche.

Die vertikale Ausrichtung der optischen Linse liegt vor, wenn die optische Achse der Linse vertikal zur Erdoberfläche ausgerichtet ist und die Erdanziehungskraft entlang der optischen Achse wirkt.

Die Anordnung der Mündung des Kanals außerhalb des höchsten Punkts der ersten Linsenfläche fördert eine Durchmischung und einen Austausch des Mediums, wenn sich dieses auf der ersten Linsenfläche befindet. Beispielsweise ist auf der ersten Linsenfläche ein Kontaktbereich oder ein Kontaktvolumen zur Aufnahme einer Menge des Mediums vorhanden. Sind mehrere Kanäle ausgebildet, kann einer der Kanäle am höchsten Punkt der ersten Linsenfläche mündend ausgebildet sein. In diesem Fall sind beispielsweise eine Zuführung und eine Abführung eines Mediums durch die optische Linse über separate Kanäle möglich. Ist der am höchsten Punkt mündende Kanal im Fall der Verwendung der optischen Linse in einer Medienzuführungsvorrichtung von dem Medium zeitweise oder kontinuierlich durchströmt und ist der am höchsten Punkt mündende Kanal insbesondere als Medienabführung ausgebildet, werden sich eventuell ansammelnde Gase aus dem Kontaktbereich abgeleitet.

Durch die erfindungsgemäße Ausführungen sind vorteilhaft Komponenten einer oder mehrerer Medienleitungen im unmittelbaren Bereich der optischen Linse, die beispielsweise eine Frontlinse ist, so angeordnet beziehungsweise anordenbar, dass der Bedarf an Bauraum deutlich verringert ist.

Unter Medien werden im Sinne dieser Beschreibung insbesondere Immersionsmedien, Spülmedien und Zusatzmedien verstanden. Medien können auch Nährmedien, Gase und Gasgemische oder Aerosole sein. Spülmedien dienen dazu, Reste eines Mediums, beispielsweise eines Immersionsmediums, aus der oder den Medienleitungen und Kanälen sowie aus dem Kontaktbereich zu entfernen. Zusatzmedien dienen beispielsweise der Veränderung der optischen, hydraulischen und/oder physikalischen Eigenschaften von Medien, indem diese mit einem Medium vermischt, beispielsweise gelöst oder dispergiert werden.

In geringen Dosierungen als Zusatzmedium eingesetzte Medien, beispielsweise hochprozentiger oder absoluter Alkohol, können in hohen Dosierungen als Spülmedium wirken und verwendet sein.

Die Medien sind beispielsweise in entsprechenden Reservoiren vorgehalten. Diese können mit Pumpen versehen sein, mittels denen das betreffende Medium durch die mit dem Reservoir verbundene Medienleitung(-en) gedrückt beziehungsweise gesogen wird. Es kann außerdem mindestens ein Reservoir für verbrauchte Medien vorhanden sein.

In einer möglichen Ausführung der optischen Linse bildet die Wandung des Kanals den Abschnitt der Medienleitung.

Weiterhin kann die optische Linse einen optischen Nutzbereich aufweisen, der von keinem Kanal durchzogen ist. Durch eine solche Ausführung beeinträchtigt der Kanal beziehungsweise die Kanäle nicht den Strahlengang einer der optische Linse durchdringenden Strahlung und die Nutzbarkeit der optischen Linse wird zusätzlich eingeschränkt.

In einer weiteren Ausführung ist die Medienleitung mit dem Abschnitt in dem Kanal aufgenommen. Die Medienleitung ist beispielsweise über einen Teil ihrer Länge in den Kanal eingelegt, eingesteckt, eingeklebt oder eingepresst. Die Medienleitung besteht beispielsweise aus Metall, Kunststoff, einer Gummimischung, Glas oder einem Materialverbund und ist an den Kanal angeschlossen.

Die Medienleitung kann beispielsweise ein Schlauch, eine Röhre oder ein Hohlprofil sein. Zumindest über den in dem Kanal aufgenommenen Abschnitt der Medienleitung kann diese auch ein poröses und/oder saugendes Material wie ein textiler Faden, ein offenporiger Schaum oder Schwamm oder eine poröse Keramik sein.

In weiteren Ausführungen kann die Medienleitung auch an einer Fassung der optischen Linse angebracht oder in diese integriert sein. Ist die optische Linse Bestandteil eines Objektivs, kann wenigstens eine Medienleitung in ein Gehäuse des Objektivs integriert oder an diesem angebracht sein.

Die optische Linse kann als eine Meniskuslinse oder als ein Virtuelles Relay ausgebildet sein. Einer derart ausgebildeten optischen Linse können ein oder mehrere Objektive oder andere optische Elemente zugeordnet sein, so dass einer oder mehrere Strahlengänge der zugeordneten Objektive beziehungsweise optischen Elemente durch die optische Linse verlaufen.

Unter einem Virtuellen Relay versteht man eine Linse, die ein vergrößertes virtuelles Bild der Probe auf der Probenseite erzeugt. Mit einem Mikroskopobjektiv, z. B. einem Detektionsobjektiv, wird dieses Bild auf eine Kamera oder einen anderen Detektor abgebildet.

Vorteilhaft haben eine oder beide Seiten der Linse eine asphärische Form, wodurch die Aberrationen eines schiefen Durchgangs beispielsweise durch den Boden eines Probenträgers kompensiert werden können.

Eine Meniskuslinse ist eine Linse, die zwei nach derselben Seite gekrümmte Linsenflächen besitzt. Vorteilhaft weisen die beiden Linsenflächen denselben Mittelpunkt auf. Die Meniskuslinse hat gegenüber dem Virtuellen Relay den Vorteil, dass sie einfacher und kostengünstiger herzustellen ist.

Ein Anschlusselement dient der Verbindung der Medienleitung mit dem Kanal und ist beispielsweise als eine an der optischen Linse angeformte, beispielsweise angegossene, Röhre ausgebildet. Das Anschlusselement kann über eine zusätzliche Möglichkeit zur Arretierung der Medienleitung, beispielsweise mittels einer Überwurfmutter, einer Klemmhülse oder dergleichen, verfügen. Der von dem Medium durchflossene oder durchfließbare Abschnitt des Anschlusselements wird als zur Medienleitung gehörig betrachtet.

Die optische Linse kann in verschiedenen Ausführungen unterschiedlich geformte Linsenflächen aufweisen. Die erste Linsenfläche kann in einer Ausführung der optischen Linse konkav ausgebildet sein. Die zweite Linsenfläche kann konkav, plan oder konvex ausgebildet sein.

Eine zweckmäßige Möglichkeit zur Autoimmersion ist die Ausführung der Frontlinse eines optischen Systems als Konkav- oder Meniskuslinse, wobei diese Linse nicht zwingend im eigentlichen Objektiv gefasst sein muss, sondern auch separat gefasst sein kann. Die optische Linse des erfindungsgemäßen Mikroskops kann als eine solche Frontlinse ausgebildet sein.

Die durch die konkave geformte erste Linsenfläche gebildete Kavität wird unter Zuhilfenahme der Oberflächenspannung eines Mediums, beispielsweise eines Immersionsmediums oder eines Spülmediums, mit diesem gefüllt.

Diese Kavität kann manuell oder automatisiert mit Immersionsflüssigkeit befüllt werden. Dazu ist es zweckmäßig, in Bereichen der Linse die nicht zwingend für die optische Abbildung erforderlich sind, also außerhalb eines Nutzbereichs der optischen Linse, mindestens einen Kanal für das Immersionsmedium einzubringen.

Die Linse kann aus Glas oder einem Kunststoff gefertigt und beispielsweise gegossen, gespritzt, gedreht, gefräst, gepresst oder gedruckt sein.

Ein Kanal kann in die optische Linse beispielsweise gebohrt, gefräst, erodiert, geschnitten oder mittels einer Laserstrahlung oder Ultraschall eingebracht sein. Der Kanal kann auch bereits während des Herstellungsprozesses der optischen Linse, beispielsweise während des Gießens, Pressens oder Formens ausgebildet werden. Es ist weiterhin möglich Anschlüsse, beispielsweise Schlauchanschlüsse (Oliven), der Medienleitung(-en) direkt beim Urformen der optischen Linse, z. B. Gießen oder Pressen, zu erzeugen.

Der Kanal kann auch in der Oberfläche der optischen Linse, insbesondere in der ersten Linsenfläche, ausgebildet oder dort eingebracht sein und ist dann nicht allseitig von Material der optischen Linse umschlossen. In einem derart ausgebildeten Kanal kann der Abschnitt der Medienleitung eingelegt sein. Der teils offene Kanal kann auch unter Nutzung der Schwerkraft und/oder der Oberflächenspannung zwischen Material der Kanalwandung und Medium von einem Medium durchflossen oder durch dieses benetzt sein.

Eine weitere Ausführungsform der optischen Linse besteht darin, einen zweiten Kanal in nicht für die optische Abbildung genutzten Bereichen der Linse einzubringen. Diese außerhalb des Nutzbereichs der optischen Linse befindlichen Kanäle dienen dem Abfluss oder der Absaugung des jeweiligen Mediums beispielsweise nach einem Mikroskopiervorgang.

In einer weiteren Ausführungsform ist eine dritte Bohrung, also ein dritter Kanal, außerhalb des Nutzbereichs ausgebildet. Der dritte Kanal dient der Zuführung des Spülmediums nach der Verwendung beispielsweise von Glycerin oder Immersionsöl beim Mikroskopieren, um diese Immersionsmedien wieder zu entfernen.

In weiteren Ausführungen können verschiedene Medien auch durch dieselben Kanäle zu- und/oder abgeführt werden beziehungsweise zu- und/oder abführbar sein.

Die optische Linse kann ein komplexes optisches Element sein. Beispielsweise kann sie als eine Anordnung mehrerer Einzellinsen ausgebildet sein.

In der Medienleitung kann das jeweilige Medium durch Erzeugen eines Druckunterschieds transportiert sein. Druckunterschiede können beispielsweise erzeugt werden, indem die Medienleitung und/oder ein Reservoir mit einer Pumpe, die vorzugsweise steuerbar ist, versehen ist. Alternativ kann eine Spritze an die Medienleitung angeschlossen sein.

Ein passiver Transport des Mediums durch die jeweilige Medienleitung, wie dieser beispielsweise durch Kapillareffekte und/oder durch Wirkung kommunizierender Röhren bewirkt sein kann, erlaubt beispielsweise ein einfaches Nachfüllen des Mediums bei auftretender Verdunstung oder Verlusten durch Adhäsion (der oben angeführte Effekt der "Schneckenspur"). Um diese Wirkung zu erreichen, ist der Kanal beziehungsweise sind die Kanäle hinsichtlich ihrer Abmessungen und gegebenenfalls hinsichtlich des Materials vorzugsweise so gestaltet, dass der gewünschte Kapillareffekt erzielt ist.

Um einen ungewollten und unkontrollierten Austritt von Medium in den Kontaktbereich oder aus einer Leckage der Medienleitung zu vermeiden oder zumindest zu begrenzen, kann in einer weiteren Ausführung eine Sicherheitsvorrichtung, beispielsweise ein Sicherheitsventil in oder an der Medienleitung vorgesehen sein. Außerdem kann ein Schutzelement in Form einer Platte, einer Membran oder eines Balgs vorhanden und so angeordnet sein, dass kein Medium an der optischen Linse beziehungsweise dem Objektiv mit der optischen Linse vorbei fließen kann. Das Schutzelement dichtet den Kontaktbereich an einer Seite ab.

Die optische Linse in einer ihrer Ausbildungen kann in einem Objektiv, beispielsweise als Frontlinse, verwendet sein.

Eine Lösung der Aufgabe ist auch durch eine Medienzuführungsvorrichtung erreicht, die zur Zuführung eines Mediums zu einem Kontaktbereich zwischen einer optischen Linse und einer Probe ausgebildet ist und die optische Linse sowie mindestens eine Medienleitung zur Leitung eines Mediums zwischen dem Kontaktbereich und einem Reservoir umfasst. Die optische Linse weist eine erste Linsenfläche und eine zweite Linsenfläche auf, wobei die erste Linsenfläche dazu vorgesehen ist, einem zu beobachtenden Objekt, beispielsweise der Probe, -und damit dem Kontaktbereich - zugewandt zu werden. Die zweite Linsenfläche ist dazu vorgesehen, dem zu beobachtenden Objekt abgewandt zu werden.

Die optische Linse des erfindungsgemäßen Mikroskops weist mindestens einen an dem Kontaktbereich mündenden Kanal auf. Der Kanal verläuft durch die optische Linse. Der eine Kanal beziehungsweise mindestens einer der vorhandenen Kanäle, mündet beziehungsweise münden außerhalb eines in vertikaler Ausrichtung befindlichen höchsten Punkts der ersten Linsenfläche.

Die Medienleitung ist über einen Abschnitt ihrer Länge in dem Kanal aufgenommen, wie dies bereits oben zur optischen Linse erläutert wurde.

Das Objektiv mit der optischen Linse und die Immersionsvorrichtung sind Bestandteil des erfindungsgemäßen Mikroskops, beispielsweise eines Lichtblattmikroskops. Die optische Linse beziehungsweise ein Objektiv mit einer optischen Linse werden in einer Medienzuführungsvorrichtung des erfindungsgemäßen Mikroskops verwendet.

Eine derart verwendete optische Linse weist eine erste Linsenfläche und eine zweite Linsenfläche sowie eine optische Achse auf, wobei die erste Linsenfläche dazu vorgesehen ist, einem zu beobachtenden Objekt zugewandt zu werden und die zweite Linsenfläche dazu vorgesehen ist, dem zu beobachtenden Objekt abgewandt zu werden.

Beispielsweise wird die optische Linse bei einer Verwendung in einer Medienzuführungsvorrichtung in einer Arbeitsstellung angeordnet, in der die optische Achse in der Arbeitsstellung gegenüber einer Vertikalen geneigt ist. Die Abweichung der optischen Achse der Linse von der Vertikalen beträgt beispielsweise wenigstens 15°. Die optische Linse weist mindestens einen an der ersten Linsenfläche mündenden Kanal auf, wobei der Kanal durch die optische Linse verläuft. In dem Kanal ist wenigstens ein Abschnitt einer Medienleitung ausgebildet. Der Kanal beziehungsweise mindestens einer der vorhandenen Kanäle mündet beziehungsweise münden außerhalb eines in der Arbeitsstellung befindlichen höchsten Punkts der ersten Linsenfläche.

Die in der Arbeitsstellung geneigte optische Achse der optischen Linse erlaubt eventuell aus einem Medium austretenden Gasen an einen Randbereich der optischen Linse aufzusteigen, wobei der Randbereich vorteilhafterweise nicht in einem Nutzbereich der optischen Linse liegt.

Der Randbereich kann mit einer Ableitung, beispielsweise einer Entlüftung, versehen sein, wobei die Entlüftungsfunktion durch einen der Kanäle der optischen Linse erfüllt werden kann. Die Linsenflächen können beispielsweise konkav, plan oder konvex oder asphärisch sein.

Die Erfindung bietet eine ganze Reihe von Vorteilen. So kann die Frontlinse eines klassischen Objektivs modifiziert und mit wenigstens einem Kanal versehen werden. Es müssen keine neuen Objektive angeschafft werden. Der erforderliche Bauraum ist gegenüber dem aus dem Stand der Technik bekannten Lösungen verringert.

Nachfolgend wird die Erfindung anhand von Abbildungen und Ausführungsbeispielen näher erläutert. Es zeigen:
Fig. 1 eine schematische Darstellung eines ersten Ausführungsbeispiels einer optischen Linse des erfindungsgemäßen Mikroskops in einer Schnittdarstellung,
Fig. 2 eine schematische Darstellung eines zweiten Ausführungsbeispiels einer optischen Linse des erfindungsgemäßen Mikroskops in einer Schnittdarstellung als Frontlinse eines Objektivs,
Fig. 3 eine schematische Darstellung eines dritten Ausführungsbeispiels einer optischen Linse des erfindungsgemäßen Mikroskops in einer Ansicht von oben,
Fig. 4 eine schematische Darstellung eines Ausführungsbeispiels einer Immersionsvorrichtung des erfindungsgemäßen Mikroskops in einer ersten Ansicht,
Fig. 5 eine schematische Darstellung des Ausführungsbeispiels einer Immersionsvorrichtung des erfindungsgemäßen Mikroskops in einer zweiten Ansicht und
Fig. 6 eine schematische Darstellung eines Ausführungsbeispiels einer Medienzuführungsvorrichtung des erfindungsgemäßen Mikroskops mit einer gegenüber der Vertikalen geneigt angeordneten optischen Linse.

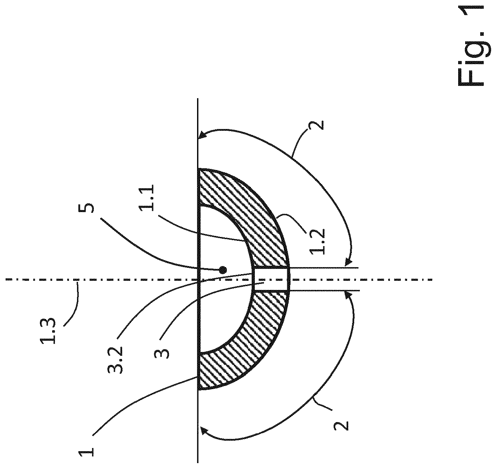

Die in den Figuren 1 bis 6 dargestellten Ausführungsbeispiele sind schematisch und nicht maßstabsgetreu. Gleiche Bezugszeichen bezeichnen gleiche Elemente.

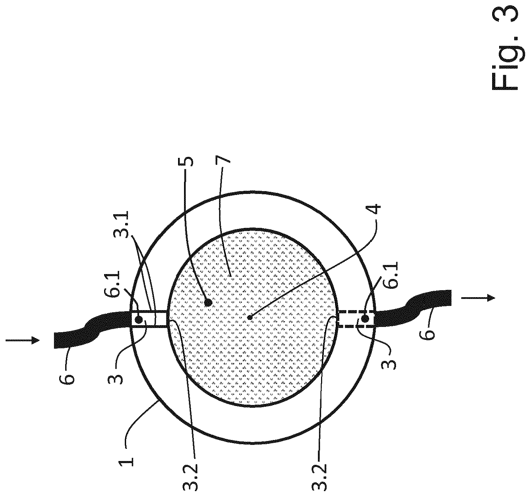

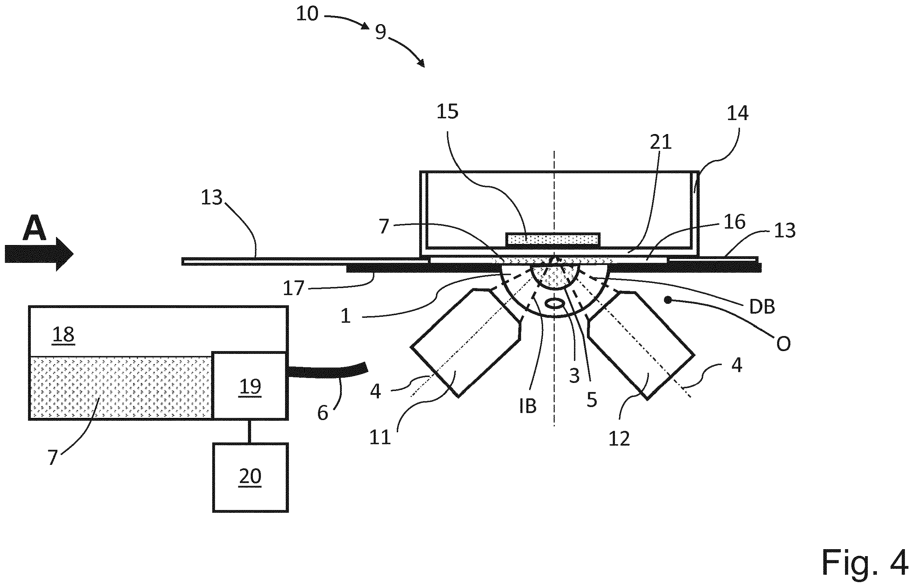

Ein erstes Ausführungsbeispiel einer optischen Linse 1 des erfindungsgemäßen Mikroskops ist in der Fig. 1 als ein Schnitt entlang eines Durchmessers der rotationssymmetrischen optischen Linse 1 gezeigt. Die optische Linse 1 weist eine erste Linsenfläche 1.1 und eine zweite Linsenfläche 1.2 auf. Eine optische Achse 1.3 der optischen Linse 1 fällt mit einer Vertikalen zusammen. Die in Fig. 1 dargestellte optische Linse 1 ist senkrecht ausgerichtet. Die erste Linsenfläche 1.1 ist konkav geformt und einem Kontaktbereich 5 zugewandt, der mit einem Medium 7 (siehe Fig. 3) gefüllt sein kann. In der Mitte der optischen Linse 1, d. h. in ihrem Scheitelpunkt oder Zenit, ist ein Kanal 3 vorhanden, der das Material der optischen Linse 1 durchzieht und dessen eine Mündung 3.2 dem Kontaktbereich 5 zugewandt ist. Die erste Linsenfläche 1.1 ist dazu vorgesehen, einem zu beobachtenden Objekt 15 (siehe Fig. 4, 5 und 6) zugewandt zu werden, während die zweite Linsenfläche 1.2 dazu vorgesehen ist, dem zu beobachtenden Objekt 15 abgewandt zu werden.

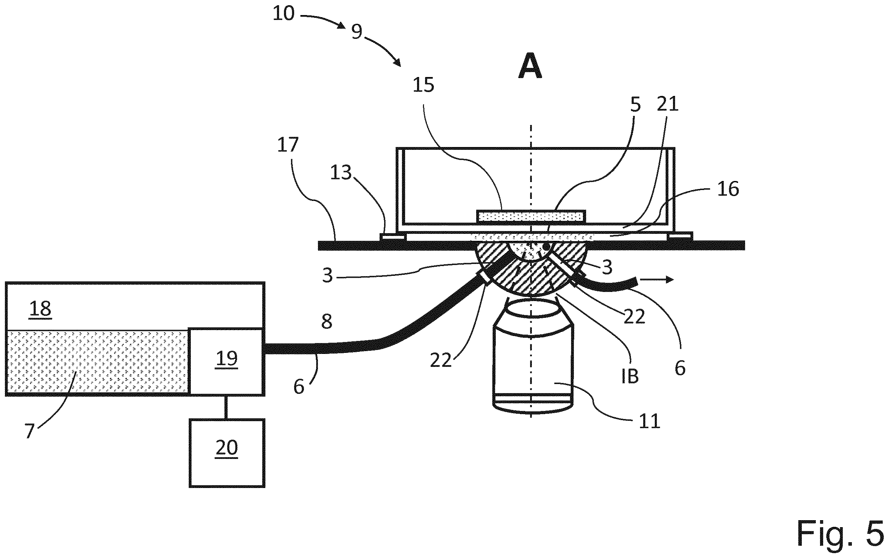

Diejenigen Bereiche der optischen Linse 1, die nicht von dem Kanal 3 durchzogen sind, stellen einen optischen Nutzbereich 2 der optischen Linse 1 dar. In dem Nutzbereich 2 werden durch die optische Linse 1 hindurchtretende Strahlen, beispielsweise einer Beleuchtungsstrahlung IB (siehe Fig. 4 und 5) und/oder einer Detektionsstrahlung DB (siehe Fig. 4), nicht durch den Kanal 3 beeinflusst, insbesondere nicht durch diesen gebrochen, gebeugt und/oder dispergiert.

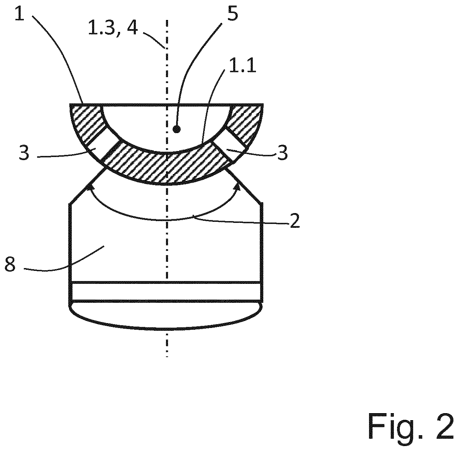

Die optische Linse 1 gemäß dem ersten Ausführungsbeispiel kann als eine einzelne Linse, beispielsweise als eine Meniskuslinse oder als ein virtuelles Relay, einem oder mehreren Objektiven 8 so zugeordnet sein, dass deren jeweiligen optischen Achsen 4 auf den Nutzbereich 2 gerichtet sind (siehe Fig. 2, 4 und 5).

Eine Ausführung der optischen Linse 1 als eine Frontlinse eines Objektivs 8 ist in Fig. 2 dargestellt. Die optische Linse 1 des zweiten Ausführungsbeispiels weist zwei Kanäle 3 auf, die in den seitlichen Bereichen der optischen Linse 1 ausgebildet sind. Infolgedessen befindet sich der Nutzbereich 2 um die optische Achse 4 des Objektivs 8 und nimmt den zentralen Teil der optischen Linse 1 ein.

Die Kanäle 3 sind soweit seitlich liegend ausgebildet, dass eine Zuführung beziehungsweise eine Ableitung eines Mediums 7 (siehe Fig. 3 bis 6) in den beziehungsweise aus dem Kontaktbereich 5 mittels einer hier nicht dargestellten Medienleitung 6 (siehe Fig. 3 bis 5) erfolgen kann.

Ein drittes Ausführungsbeispiel einer optischen Linse 1 des erfindungsgemäßen Mikroskops ist in Fig. 3 in Draufsicht gezeigt. Zu sehen ist die konkav geformte erste Linsenfläche 1.1, die in ihrer zentralen Vertiefung als den Kontaktbereich 5 mit einem Medium 7 gefüllt ist. Das Medium 7 ist über einen Kanal 3, der als ein in Richtung auf den Betrachter offener Kanal 3 ausgebildet ist, dem Kontaktbereich 5 zuführbar. Das Medium 7 ist über einen zweiten Kanal 3, der von dem Material der optischen Linse 1 umschlossen ist (durch Strichlinien symbolisiert), ableitbar. Die Kanäle 3 münden an der zentralen Vertiefung und damit an dem Kontaktbereich 5 (Mündungen 3.2).

An den Kanälen 3 ist jeweils eine Medienleitung 6 angeschlossen. Die Wandungen 3.1 der Kanäle 3 dienen als Abschnitte 6.1 der Medienleitungen 6.

Eine erfindungsgemäße Immersionsvorrichtung 9 ist in der Fig. 4 gezeigt. Die Immersionsvorrichtung 9 ist Bestandteil eines nicht näher dargestellten Mikroskops 10.

Die optische Linse 1 ist in Form einer Meniskuslinse ausgebildet und einem Tisch 13, vorteilhaft einem gesteuert verfahrbaren Tisch 13, zugeordnet. Die optische Linse 1 ist von einem Schutzelement 17 in Form einer horizontal angeordneten Membran gegen einen Optikraum O, in dem Objektive, im Beispiel ein Beleuchtungsobjektiv 11 und ein Detektionsobjektiv 12, angeordnet sind und in den sich die optische Linse 1 hinein wölbt, abgedichtet.

Auf dem Tisch 13 ist eine Petrischale als ein Probenträger 14 vorhanden, auf dessen Boden eine Probe 15 platziert ist. Dieser Boden wird durch ein hinsichtlich seiner Dicke und Brechzahl definiertem Deckglas 21 gebildet.

Das Beleuchtungsobjektiv 11 und das Detektionsobjektiv 12, und somit deren optische Achsen 4, sind jeweils gegenüber einer als Bezugsachse gezeigten vertikalen Achse (unterbrochene Volllinie) unter einem Winkel von beispielsweise 45° geneigt und in einen gemeinsamen Punkt der Probe 15 gerichtet. Beide Objektivachsen 4 stehen dabei orthogonal zueinander. Die optische Linse 1 befindet sich in den Strahlengängen von Beleuchtungsobjektiv 11 und Detektionsobjektiv 12, was durch die schematische Darstellung einer Beleuchtungsstrahlung IB (illumination beam) und einer Detektionsstrahlung DB (detection beam) mit unterbrochenen Volllinien gezeigt ist.

Die optische Linse 1 weist zwei Kanäle 3 auf, von denen in Fig. 4 die für den Anschluss einer Medienleitung 6 vorgesehene Mündung 3.2 einer der Kanäle 3 zu sehen ist.

Die Medienleitung 6 ist mit einem Reservoir 18 verbunden, in dem Medium 7 enthalten und mittels einer Pumpe 19 durch die Medienleitung 6 dem Kontaktbereich 5 zuführbar ist. Die Pumpe 19 ist mit einer Steuereinheit 20 verbunden und durch diese ansteuerbar.

Zwischen der optischen Linse 1 und der Unterseite des Probenträgers 14 ist ein Spalt 16 vorhanden. Dieser wird aufgrund auftretender Kapillarkräfte mit Medium 7, beispielsweise mit Immersionsmedium, gefüllt, wenn der Kontaktbereich 5 mit dem Medium 7 gefüllt ist. Der mit Medium 7 gefüllte Kontaktbereich 5, zu dem der Bereich des Spalts 16 unterhalb der Probe 15 gerechnet werden kann, bildet eine optische Verbindung mit geringen oder keinen Brechzahlunterschieden zwischen der optischen Linse 1 und dem Material des Bodens des Probenträgers 14.

In einer alternativen Ausführung weist die als Meniskuslinse ausgestaltete optische Linse 1 einen Kanal 3 auf, der durch den Zenit der optischen Linse 1 von der ersten Linsenfläche 1.1 zur zweiten Linsenfläche 1.2 verläuft. Der Kanal 3 kann zur Ableitung des Mediums 7 verwendet sein. So kann das Medium 7 über das Schutzelement 17 in den Kontaktbereich 5 geführt sein, beispielsweise in diesen hineinlaufen. Bei Bedarf wird das Medium 7 durch den Kanal 3 hindurch abgesaugt.

Die Immersionsvorrichtung 9 ist in der Fig. 5 in einer zweiten Ansicht gezeigt, wobei die Blickrichtung der Richtung des Pfeils A aus Fig. 4 entspricht. Das Reservoir 18, die Pumpe 19 mit Medienleitung 6 und die Steuereinheit 20 sind mit der gleichen Perspektive wie in Fig. 4 dargestellt.

In Fig. 5 sind zusätzlich zu Fig. 4 an die optische Linse 1 (geschnitten dargestellt) angeschlossene Medienleitungen 6 gezeigt. Die Medienleitungen 6 sind mittels je eines Anschlusselements 22, z. B. eines Stutzens mit einer Überwurfmutter, an die optische Linse 1 angeschlossen.

Die von dem Reservoir 18 kommende Medienleitung 6 ist zusätzlich in den Kanal 3 bis zu dessen Mündung 3.2 eingesteckt. Die andere Medienleitung 6, die zum Ableiten des Mediums 7 aus dem Kontaktbereich 5 dient, ist nur mit dem Anschlusselement 22 angeschlossen und an der optischen Linse 1 gehalten. Die Wandung 3.1 des Kanals 3 fungiert über den Abschnitt 6.1 (siehe Fig. 3) als Wand der Medienleitung 6.

Um die Immersionsvorrichtung 9 zu betreiben wird in das Reservoir 18 ein Medium 7, insbesondere ein Immersionsmedium, eingefüllt. Die Auswahl des Mediums 7 erfolgt beispielsweise in Abhängigkeit der Eigenschaften der Materialien der optischen Linse 1, des Deckglases 21 und/oder der Probe 15 sowie der verwendeten Beleuchtungsstrahlung IB. Infolge eines Steuerbefehls der Steuereinheit 20 wird mittels der Pumpe 19 Medium 7 durch die Medienleitung 6 in den Kontaktbereich 5 gefördert, bis dieser ausgefüllt ist und eine blasenfreie Benetzung der ersten Linsenfläche 1.1 über den Nutzbereich 2 sowie des Objektträgers 14 zumindest unterhalb der Probe 15 über einen zu beobachtenden Bereich erfolgt ist.

Anschließend kann die Probe 15 beobachtet und abgebildet werden, indem mittels des Beleuchtungsobjektivs 11 die ausgewählte Beleuchtungsstrahlung IB durch den Nutzbereich 2 der optischen Linse 1 sowie durch das in dem Kontaktbereich 5 befindliche Medium 7 und den Boden des Objektträgers 14 in die Probe 15 gestrahlt wird. Von der Probe 15 kommende Detektionsstrahlung DB in Form reflektierter Anteile der Beleuchtungsstrahlung IB und/oder mittels der Beleuchtungsstrahlung IB angeregter Strahlungen wie Fluoreszenzstrahlung werden mittels des Detektionsobjektivs 12 erfasst und einem Detektor (nicht gezeigt) zugeleitet.

Nach beendeter Probenuntersuchung kann das Immersionsmedium gegen neues Immersionsmedium oder gegen ein Spülmedium ausgetauscht werden. Das verbrauchte Medium 7, in diesem Fall das Immersionsmedium, gelangt durch den zweiten Kanal 3 aus dem Kontaktbereich 5 und wird beispielsweise in ein Sammel- oder Abfallreservoir (nicht gezeigt) geleitet.

In weiteren Ausführungen der Immersionsvorrichtung 9 wird die Pumpe 19 mittels der Steuereinheit 20 derart angesteuert, dass das Medium 7 in dem Kontaktbereich 5 intervallweise oder permanent ausgetauscht wird.

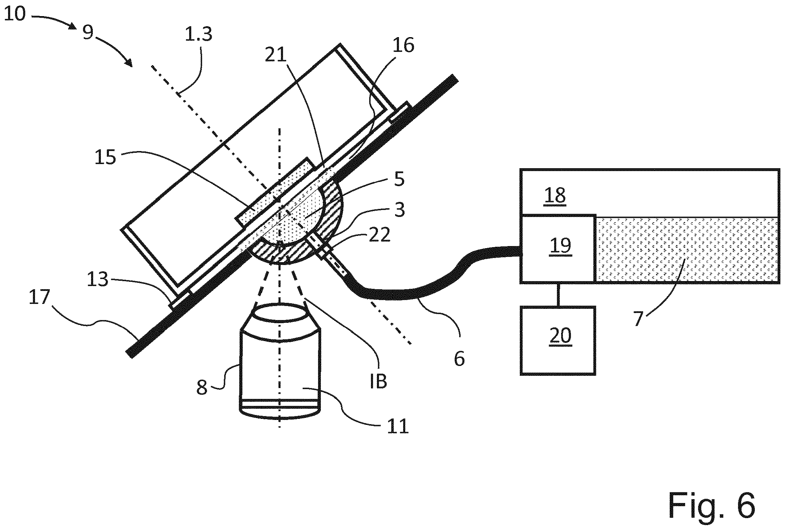

Eine Verwendung einer optischen Linse 1 mit einem Kanal 3 ist in einem Beispiel in Fig. 6 dargestellt. Die optische Achse 4 des Objektivs 8 fällt mit der Vertikalen zusammen. Die optische Achse 1.3 der optischen Linse 1 ist gegenüber der Vertikalen um etwa 45°geneigt und befindet sich in einer Arbeitsstellung.

### Bezugszeichen

- 1: optische Linse
- 1.1: erste Linsenfläche
- 1.2: zweite Linsenfläche
- 1.3: optische Achse (der optischen Linse 1)
- 2: (optischer) Nutzbereich
- 3: Kanal
- 3.1: Wandung (des Kanals)
- 3.2: Mündung (des Kanals)
- 4: optische Achse (des Objektivs)
- 5: Kontaktbereich
- 6: Medienleitung
- 6.1: Abschnitt (der Medienleitung)
- 7: Medium
- 8: Objektiv
- 9: Immersionsvorrichtung
- 10: Mikroskop
- 11: Beleuchtungsobjektiv
- 12: Detektionsobjektiv
- IB: Beleuchtungsstrahlung
- DB: Detektionsstrahlung
- O: Optikraum
- 13: Tisch
- 14: Probenträger
- 15: Probe
- 16: Spalt
- 17: Schutzelement
- 18: Reservoir
- 19: Pumpe
- 20: Steuereinheit
- 21: Deckglas
- 22: Anschlusselement

## Patentansprüche

1. Mikroskop (10) mit
- mehreren Objektiven (8) mit einer oder mit mehreren gemeinsamen optischen Linsen (1), wobei die gemeinsame optische Linse (1) eine erste Linsenfläche (1.1) und eine zweite Linsenfläche (1.2) aufweist, wobei die erste Linsenfläche (1.1) dazu vorgesehen ist, einem zu beobachtenden Objekt (15) zugewandt zu werden und die zweite Linsenfläche (1.2) dazu vorgesehen ist, dem zu beobachtenden Objekt (15) abgewandt zu werden,
**dadurch gekennzeichnet, dass**
- die gemeinsame optische Linse (1) mindestens einen an der ersten Linsenfläche (1.1) mündenden Kanal (3) aufweist, wobei der Kanal (3) durch die optische Linse (1) verläuft, und
- in dem Kanal (3) wenigstens ein Abschnitt (6.1) einer Medienleitung (6) ausgebildet ist, und mit einer Medienzuführungsvorrichtung (9) zur Zuführung eines Mediums (7) zu einem Kontaktbereich (5) zwischen der optischen Linse (1) und dem Objekt (15), umfassend die optische Linse (1), mindestens eine Medienleitung (6) zur Leitung eines Mediums (7) zwischen dem Kontaktbereich (5) und einem Reservoir (18),
wobei die Medienleitung (6) über einen Abschnitt (6.1) ihrer Länge in dem Kanal (3) aufgenommen ist.

2. Mikroskop (10) nach Anspruch 1, **dadurch gekennzeichnet, dass** ein Nutzbereich (2) der optischen Linse (1) vorhanden ist, der von keinem Kanal (3) durchzogen ist.

3. Mikroskop (10) nach Anspruch 1 oder 2, **dadurch gekennzeichnet, dass** die Wandung (3.1) des Kanals (3) den Abschnitt (6.1) der Medienleitung (6) bildet.

4. Mikroskop (10) nach Anspruch 1 oder 2, **dadurch gekennzeichnet, dass** die Medienleitung (6) mit dem Abschnitt (6.1) in dem Kanal (3) aufgenommen ist.

5. Mikroskop (10) nach einem der Ansprüche 1 bis 4, **dadurch gekennzeichnet, dass** die erste Linsenfläche (1.1) konkav ausgebildet ist.

6. Mikroskop (10) nach einem der Ansprüche 1 bis 5, **dadurch gekennzeichnet, dass** die zweite Linsenfläche (1.2) konkav, plan oder konvex oder asphärisch ausgebildet ist.

7. Mikroskop (10) nach Anspruch 1, **dadurch gekennzeichnet, dass** die optische Linse (1) als eine Anordnung mehrerer Einzellinsen ausgebildet ist.

8. Mikroskop (10) nach einem der vorhergehenden Ansprüche, **dadurch gekennzeichnet, dass** der Kanal (3) oder, wenn mehrere Kanäle (3) ausgebildet sind, mindestens einer der vorhandenen Kanäle (3) außerhalb eines in vertikaler Ausrichtung befindlichen höchsten Punkts der ersten Linsenfläche (1.1) mündet, wobei eine vertikale Ausrichtung der optischen Linse (1) vorliegt, wenn die optische Achse (1.3) der Linse (1) vertikal zur Erdoberfläche ausgerichtet ist.

## Claims

1. Microscope (10) having
- a plurality of objectives (8) with one or with a plurality of common optical lenses (1), wherein the common optical lens (1) has a first lens surface (1.1) and a second lens surface (1.2), wherein the first lens surface (1.1) is provided in order to be oriented towards an object (15) to be observed and the second lens surface (1.2) is provided in order to be oriented away from the object (15) to be observed,
**characterized in that**
- the common optical lens (1) has at least one channel (3) opening at the first lens surface (1.1), wherein the channel (3) extends through the optical lens (1), and
- at least one portion (6.1) of a media line (6) is formed in the channel (3),
and having a media feed apparatus (9) for feeding a medium (7) to a contact region (5) between the optical lens (1) and the object (15), comprising the optical lens (1), at least one media line (6) for guiding a medium (7) between the contact region (5) and a reservoir (18),
wherein the media line (6) is accommodated over a portion (6.1) of its length in the channel (3).

2. Microscope (10) according to Claim 1, **characterized in that** a used region (2) of the optical lens (1) through which no channel (3) extends is provided.

3. Microscope (10) according to Claim 1 or 2, **characterized in that** the wall (3.1) of the channel (3) forms the portion (6.1) of the media line (6).

4. Microscope (10) according to Claim 1 or 2, **characterized in that** the media line (6) is accommodated with the portion (6.1) in the channel (3).

5. Microscope (10) according to any of Claims 1 to 4, **characterized in that** the first lens surface (1.1) is concavely formed.

6. Microscope (10) according to any of Claims 1 to 5, **characterized in that** the second lens surface (1.2) is formed to be concave, planar or convex or aspheric.

7. Microscope (10) according to Claim 1, **characterized in that** the optical lens (1) is formed as an arrangement of a plurality of individual lenses.

8. Microscope (10) according to any of the preceding claims, **characterized in that** the channel (3) or, if a plurality of channels (3) are formed, at least one of the channels (3) present opens outside a highest point of the first lens surface (1.1) located in the vertical alignment, wherein a vertical alignment of the optical lens (1) is present if the optical axis (1.3) of the lens (1) is aligned vertically to the Earth's surface.

## Revendications

1. Microscope (10) avec
- plusieurs objectifs (8) avec une ou plusieurs lentilles optiques communes (1), la lentille optique commune (1) présentant une première surface de lentille (1.1) et une deuxième surface de lentille (1.2), la première surface de lentille (1.1) étant prévue pour être tournée vers un objet à observer (15) et la deuxième surface de lentille (1.2) étant prévue pour être détournée de l'objet à observer (15),
**caractérisé en ce que**
- la lentille optique commune (1) présente au moins un canal (3) débouchant sur la première surface de lentille (1.1), le canal (3) s'étendant à travers la lentille optique (1), et
- au moins une section (6.1) d'une conduite de fluide (6) est réalisée dans le canal (3),
et avec un dispositif d'amenée de fluide (9) pour l'amenée d'un fluide (7) à une zone de contact (5) entre la lentille optique (1) et l'objet (15), comprenant la lentille optique (1), au moins une conduite de fluide (6) pour la conduite d'un fluide (7) entre la zone de contact (5) et un réservoir (18),
la conduite de fluide (6) étant reçue sur une section (6.1) de sa longueur dans le canal (3).

2. Microscope (10) selon la revendication 1, **caractérisé en ce qu'**une zone utile (2) de la lentille optique (1) qui n'est traversée par aucun canal (3) est présente.

3. Microscope (10) selon la revendication 1 ou 2, **caractérisé en ce que** la paroi (3.1) du canal (3) forme la section (6.1) de la conduite de fluide (6).

4. Microscope (10) selon la revendication 1 ou 2, **caractérisé en ce que** la conduite de fluide (6) est reçue avec la section (6.1) dans le canal (3).

5. Microscope (10) selon l'une quelconque des revendications 1 à 4, **caractérisé en ce que** la première surface de lentille (1.1) est réalisée sous forme concave.

6. Microscope (10) selon l'une quelconque des revendications 1 à 5, **caractérisé en ce que** la deuxième surface de lentille (1.2) est réalisée sous forme concave, plane, convexe ou asphérique.

7. Microscope (10) selon la revendication 1, **caractérisé en ce que** la lentille optique (1) est réalisée sous la forme d'un agencement de plusieurs lentilles individuelles.

8. Microscope (10) selon l'une quelconque des revendications précédentes, **caractérisé en ce que** le canal (3) ou, si plusieurs canaux (3) sont réalisés, au moins l'un des canaux (3) présents débouche en dehors d'un point le plus haut, se trouvant dans une orientation verticale, de la première surface de lentille (1.1), une orientation verticale de la lentille optique (1) existant lorsque l'axe optique (1.3) de la lentille (1) est orienté verticalement par rapport à la surface de la terre.
